# EUROPEAN PATENT SPECIFICATION

(11) **EP 3 553 926 B1**
(45) Date of publication and mention of the grant of the patent: **29.12.2021**
(21) Application number: 18167274.2
(22) Date of filing: 13.04.2018
(51) Int. Cl.: H02K 7/06, H02K 7/08, F16H 61/32, F16H 61/28

(54) **ELECTROMECHANICAL ACTUATOR**
ELEKTROMECHANISCHER AKTUATOR
ACTIONNEUR ÉLECTROMÉCANIQUE

(43) Date of publication of application: 16.10.2019
(73) Proprietor: KNORR-BREMSE Systeme für Nutzfahrzeuge GmbH, 80809 München (DE)
(72) Inventor: Németh, Huba, H-1116 Budapest (HU); Mlinárcsek, Csaba, H-1165 Budapest (HU); Kovácsik, Peter, H-1149 Budapest (HU); Rapp, Tamás, H-8229 Csopak (HU); Kokrehel, Csaba, H-1119 Budapest (HU); Toth, Janos, H-6000 Kecskemét (HU)
(74) Representative: LifeTech IP Spies & Behrndt Patentanwälte PartG mbB

(56) References cited:
- DE-A1-102006 015 688
- DE-A1-102012 012 656
- US-A- 5 205 179
- US-B1- 9 017 419

## Description

The present invention relates to an electromechanical actuator and, in particular, to a compact electromechanical actuator for motor vehicles.

Conventional electro-pneumatic actuators are used on commercial vehicles, wherein these actuators utilize pneumatic energy sources via pneumatic cylinders to provide the actuation for different devices such as a clutch, a gear shift, a countershaft brake, wheel brake actuators. In most cases the actuation implies an axial (linear) displacement of an actuation member transmitting an actuation force to achieve a desired result.

As hybrid and pure electric vehicles are getting more and more widespread and compressed air is getting less commonly available, there is an increasing demand for pure electromechanical actuators. DE 10 2006 015 688 A1 discloses an actuator assembly which is driven by electric motor, wherein a rotation-translation converter is arranged between the rotor and the stator. DE 10 2012 012 656 A1 discloses another actuator assembly which is driven by electric motor, wherein rotation-translation converter is arranged between the rotor and the stator to move a shaft in a translational direction. US 5,205,179 A discloses yet another actuator assembly which is driven by an electric motor. Furthermore, US 6,886,425 B2 discloses a conventional electromagnetic shift arrangement, wherein a linear shift of an actuation member is provided by an electromagnetic device. Another conventional actuator is disclosed in US 8,344,565, where an actuation arrangement comprises an actuation member that is driven by an electric machine mounted axially displaceable on a rotary shaft. These conventional actuators, however, involve many different components and are thus not as reliable as desired.

Therefore, there is a need for alternative solutions for an electromechanical actuator suitable in motor vehicles.

At least some of the problems of the conventional devices are overcome by an electromechanical actuator according to claim 1 and a vehicle according to claim 11. The dependent claims refer to specifically advantageous realizations of the subject matter of claim 1.

The present invention relates to an electromechanical actuator for a motor vehicle. The actuator comprises an electric motor unit with a stator and a rotor, and a converter to convert a (relative) rotation between the stator and the rotor into a (relative) translation enabling an actuation in the motor vehicle, wherein at least part of the converter is arranged on a surface of the stator facing the rotor. The translation shall, in particular, include a linear or axial motion or displacement relative between the stator and the rotor, wherein the axial direction shall refer to a direction substantially parallel to a rotation axis of the relative rotation between the stator and rotor.

Optionally, the converter comprises at least one of the following connection or coupling elements: a thread, a pin in a groove coupling, two grooves with rolling elements in-between, a pin to cam connection, another component providing a linear movement upon a relative rotation between the stator and the rotor.

Within the present invention the term "connection" or "connecting" does not necessarily mean that the respective components are rigidly fixed to one another, but merely that there is some kind of coupling that allows to transfer a force or a momentum.

Optionally, the electric motor unit and the converter form one integrated unit. Hence, the converter may be formed directly as part of at least one component of the electric motor unit.

Optionally, the converter acts as a bearing to hold the rotor rotatable relative to the stator. The stator or the rotor can be relatively fixed to the motor vehicle.

Optionally, the electromechanical actuator comprises an actuation member coupled to the converter and placed concentrically or eccentrically to the rotor, the actuation member being driven by the converter to provide a linear force for the actuation upon the relative rotation of the rotor. The eccentric placement of the actuation member relative to the rotor may, for example, be achieved by an electric motor unit (and thus also the rotor) which is formed much smaller or larger than gear wheels used to transmit a rotation (for example within an exemplary gear unit). In the eccentric placement the rotational axis of the transmission or rotary shaft does not coincide with the rotational axis of the electric motor. Optionally, the actuation member is axially fixed relative to the rotor and is configured to rotate freely inside and relative to the rotor.

According to the invention, the stator represents a closed or an opened ring surrounding at least partially the rotor.

Optionally, the converter is configured to provide a conversion characteristic such that the axial movement of the rotor depends on its rotational direction only. This conversion characteristic may, for example, be achieved by a normal threaded connection/coupling between the rotor and stator.

Optionally, the converter is configured to provide a non-linear conversion characteristic between rotation and translation. The nonlinear conversion characteristic can, for example, be achieved by providing a groove and a pin, one at the stator and the other at the rotor. The conversion characteristic is now coded in the pitch of the groove which may be constant or homogenous (the same at each axial location) or inhomogeneous (different at different axial locations). As a result, the pin within the groove is moved axially differently depending on the axial position of the pin within the groove.

Optionally, the converter is configured to provide a conversion characteristic such that a translational movement of the rotor changes while of the rotor maintains its rotational direction and rotational rate. To achieve this conversion characteristic, again a pin and a groove coupling may be employed, wherein now the groove may be closed implying that the pin in the groove, when moving around by one revolution, comes back to the original position. Hence, along the groove a cam-structure is implemented so that the pin moves first axially in one direction followed by an axial movement in the opposite direction.

It is of particular advantage if the converter comprises a self-locking mechanism. This locking may be achieved by forming a threaded connection or groove with such a pitch that no further measures are needed to keep the actuation member in a desired position - even with a disabled electric motor unit. If this is not possible, an additional locking mechanism (e.g. by a latch) may be provided to keep a desired position of the actuation member.

The present invention relates further to vehicle, in particular to a commercial vehicle, that includes at least one component selected from the following: a clutch, a gearbox, a counter shaft brake, a (wheel) brake. The at least one component comprises an electromechanical actuator as defined before.

Some advantageous aspects of the actuator will be described in the following by way of examples only, and with respect to the accompanying figures, in which:
- Fig. 1: depicts a cross-section view of an electromechanical actuator according to an embodiment of the present invention.
- Fig. 2: depicts an enlarged view of the upper portion of the cross-sectional view of Fig. 1.
- Figs. 3A ,3B: depict the actuator in different engaged positions.
- Fig. 4: depict an embodiment for the stator with a plurality of winding sections which are separated by sections where the converter is provided.
- Fig. 5: depicts the stator according to another embodiment of the present invention.

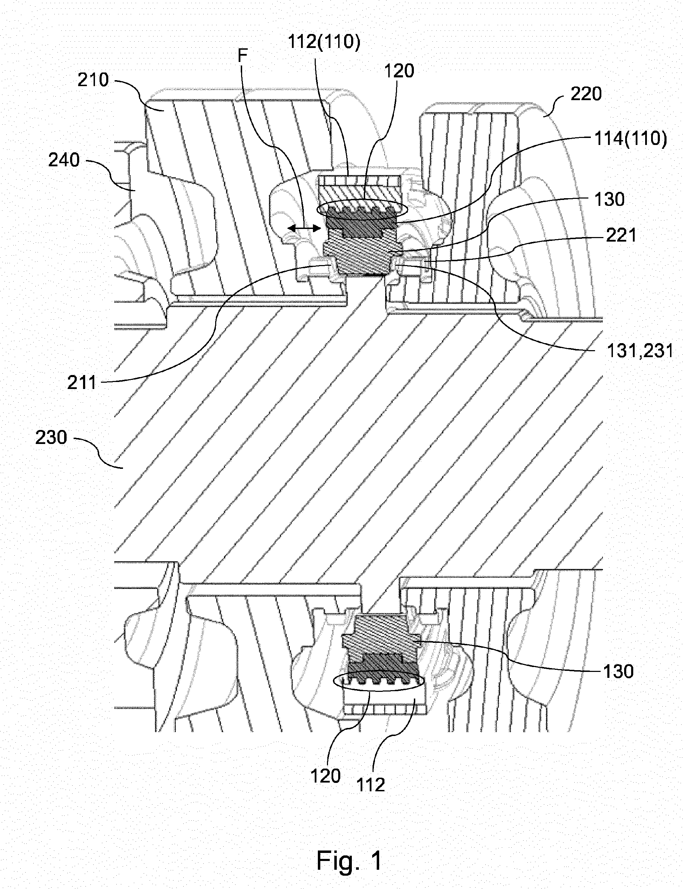

**Fig. 1** depicts a cross-sectional view of an electromechanical actuator according to an embodiment of the present invention. The actuator is integrated within an exemplary unit of a motor vehicle, which may be: a gear unit, a clutch unit, a brake unit or any other unit. The electromechanical actuator comprises an electric motor unit 110 with a stator 112 and a rotor 114. The actuator further includes a converter 120 configured to convert a rotation (or angular momentum) between the stator 112 and the rotor 114 into a translation (or a linear or axial force F) enabling an actuation in the unit of the motor vehicle. In this embodiment the converter 120 is implemented by threads on a surface of the stator 112 facing the rotor 114.

The installation environment of Fig. 1 further comprises a first gear wheel 210, a second gear wheel 220 and, optionally, further gears wheels 240 which are arranged on a rotary shaft 230. The gear wheels 210, 220 shall be connected/coupled to the rotary shaft 230 based on an actuation of the electromechanical actuator. To achieve this functionality, the rotor 114 couples to an actuation member 130 which is axially shifted to different positions by the axial force F provided by the rotor 114 and transmitted to the actuation member 130 by the threaded connection.

The actuation member 130 may comprise internal teeth 131 which may engage with the rotary shaft 230 that may comprise corresponding external teeth 231. Additional external teeth 211, 221 are provided on the first gear 210 and on the second gear 220. In the position depicted in Fig. 1, the actuation member 130 engages only with the external teeth 231 of the rotary shaft 230, but not the external teeth 211 of the first gear wheel 210 or the external teeth 221 of the second gear wheel 220.

When actuating the electromechanical actuator, the rotor 114 will move axially parallel to the rotation axis of the rotary shaft 230. Consequently, also the actuation member 130 moves axially driven by the axial force F. If the actuation member 130 moves to the left-hand side, the rotary shaft 230 is rotationally coupled/fixed to the first gear wheel 210. If the actuation member 130 is driven to the right-hand side, the rotary shaft 230 is rotationally coupled/fixed to the second gear wheel 220 (but not any more to the first gear 210). Therefore, in the depicted central position of the actuation member 130 both gear wheels 210, 220 are decoupled from the rotary shaft 230.

In the depicted embodiment the actuator is placed concentrically around the rotary shaft 230 between two gear wheels 210, 220. Hence, the rotor 114 and the rotary shaft 230 rotate around the same rotation axis, which is in Fig. 1 is horizontally aligned within the drawing plane. The stator 112 may be fixed to a housing and the actuation member 130 may rotate freely inside the rotor 114, but it is axially coupled with the rotor 114 to receive the axial force F for the actuation. Due to the teething the actuation member 130 will always rotate together with the rotary shaft 230, can rotate freely with respect to the rotor 114, but will moved axially together with the rotor 114 of the actuator.

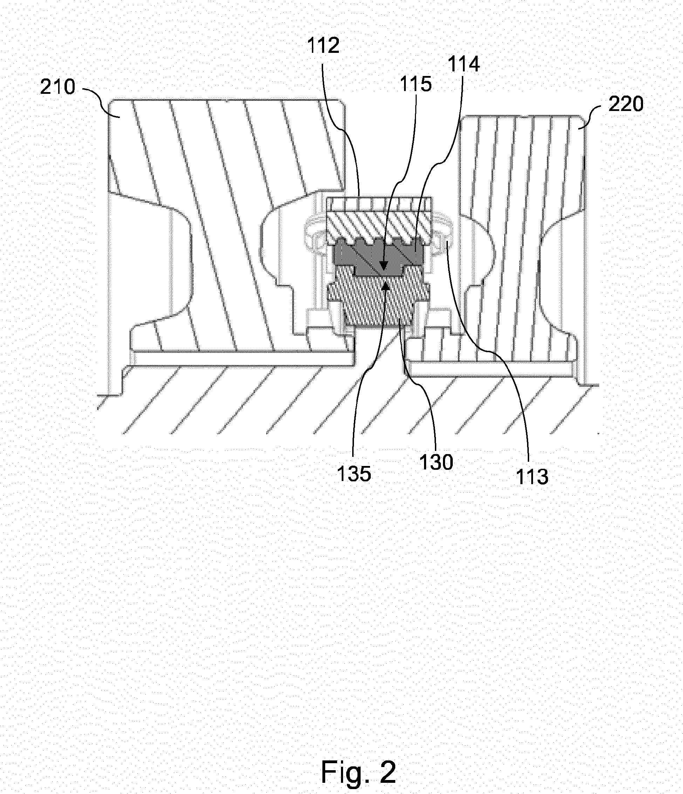

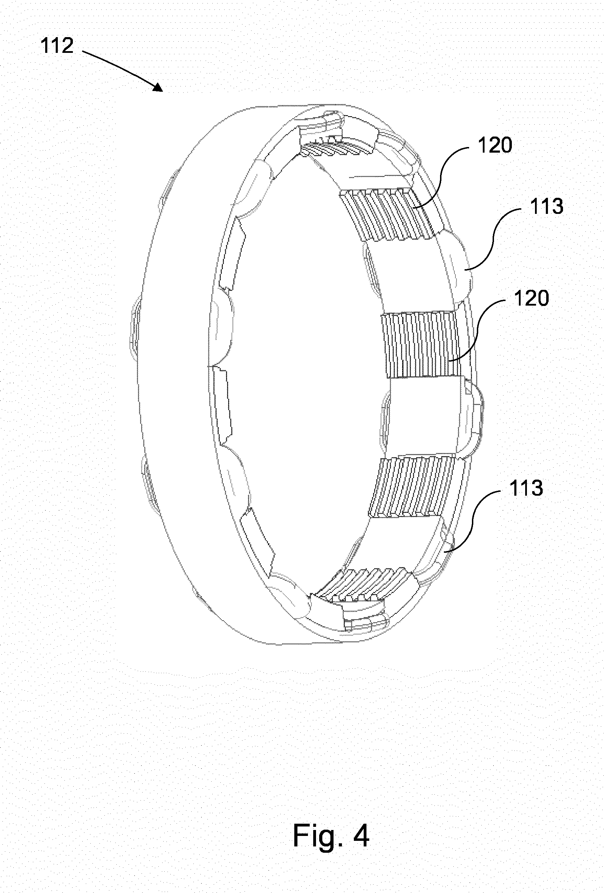

**Fig. 2** depicts an enlarged view of the upper portion of the cross-sectional view of Fig. 1, wherein the actuator is still in the neutral position. This cross-sectional view shows also coil windings 113 of the stator 112 that are provided at different angular portions of an exemplary ring-shaped stator 112 (see also Fig. 4).

The embodiment of the present invention depicted in Fig. 1 and Fig. 2 implements a particular rotational-translational converter 120 which is placed between the stator 112 and the rotor 114 of the electric motor 110. This converter 120 uses an exemplary threaded connection in the air gap of the electric motor unit 110 between the stator 112 and the rotor 114. The rotational-translational converter 120 provides also a guiding functionality so that there is no need of having an additional bearing for the rotor 114. Instead, the converter 120 itself provides this bearing function.

In particular, the electric motor unit 110 and the converter 120 may be formed as a single unit without having any additional components. This allows to integrate the electromechanical actuator even at positions where only limited place is available. The stator 112 may be fixed relative to the housing so that the rotation of the rotor 114 will result in an axial movement relative to the housing, which in turn moves the actuation member 130 to a desired position. The actuation member 130 may be formed as a sliding sleeve to provide an exemplary gear shift of a gear unit or provides an actuation for a clutch or for a brake.

Furthermore, in the depicted embodiment an exemplary recess 135 of the actuation member 130 receives a protrusion 115 of the rotor 114 providing the axial coupling between the actuation member 130 and the rotor 114 so that both components perform axial movements together. The recess 135 may be circular around the actuation member 130 so that the actuation member 130 may rotate freely inside the rotor 114.

It is understood that the depicted threaded connection and the protrusion/recess coupling represent merely examples. A person skilled in the art will easily envision further couplings/connections that provide the same functions.

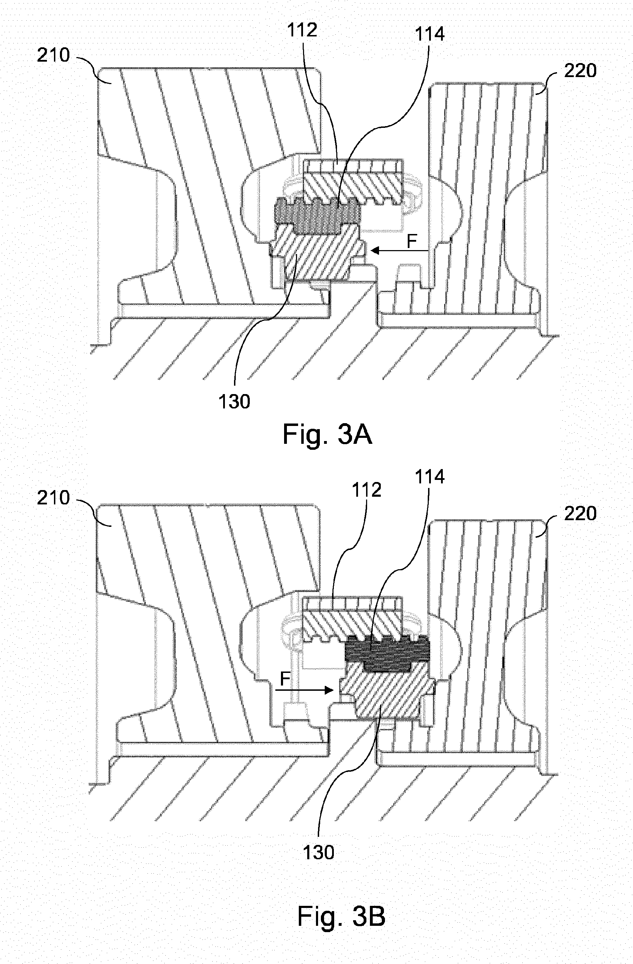

**Fig. 3A** and **Fig. 3B** depict the actuator when it is in the engaged position: in Fig. 3A the engagement is between the first gear wheel 210 and the rotary shaft 230; and in Fig. 3B the engagement is between the second gear wheel 220 and the rotary shaft 230.

These engagements are provided by a rotation of the rotor 214 that moves axially the actuation member 130 in the corresponding engagement position. In order to move the actuation member 130, the electric motor unit 110 may provide rotations in different directions resulting in opposite angular momentums which are converted by the exemplary threads into different translational forces/movements F of the rotor 114 together with the actuation member 130 relative to the stator 112.

It is of particularly advantage if the converter 120 has the self-locking feature, which may be achieved, for example, by using particular thread connections. If this is not the case, further measures may be implemented to keep the actuation member 130 in a desired (engaged) position so that the electric motor unit 110 may not be active all the time to maintain the axial position of the actuation member.

Alternatively, if there is no threaded connection between the rotor 114 and stator 112, but rather a pin/groove or pin/cam connection the shape of the groove or cam determines in which direction and how strongly the rotor 114 moves axially upon an actuation of the electric motor unit 110.

A pin/groove connection may likewise be used to implement a non-linear conversion characteristics, for example by adjusting the pitch of the groove accordingly. As a result, the rotor 114 may move at first very fast in the axial direction followed by a slow, final axial movement (or vice versa). In addition, the groove may have an almost zero pitch at the end, thereby implementing a locking mechanism. The actuation member 130 cannot move back by itself if the thread pitch is zero and a rotation will be needed by the electric motor unit 110 to return the actuation member 130 in the neutral position shown in Fig. 1 or Fig. 2.

The pin/cam connection provide the advantage that the electric motor unit 110 need to move only in one direction. For example, starting with the neutral position, after a rotation by 90° the actuation member 130 may arrive at the first engagement position (see Fig. 3A), after 180° the actuation member 130 may arrive again at the neutral engagement position and after 270° at the second engagement position (see Fig. 3B). For this connection too, the maximum and minimum of the cam (e.g. at 90° and 270° rotation) provide a stable position yielding a natural locking mechanism at these engagement position.

It is understood that the different connections can be combined or adapted and the depicted threaded connection represents merely one example. A person skilled in the art will easily envision further connections that provide the same functions.

**Fig. 4** depicts a view on the stator 112 with a plurality of coil winding sections 113 which are separated by sections where the converter 120 is provided. In the depicted embodiment the stator 112 has a ring shape with a plurality of converter sections 120 each providing a threaded portion on the internal surface of the stator 112 that faces the rotor 114 (not shown in Fig. 4) when inserted inside the ring.

This depicted ring may be an electric motor stator lamination which may be made from electric steel. The coil windings 113 may also be made as conventional electric machine windings (for example using copper windings). In addition, the converter portions 120 of the stator 112 may be nonmagnetic (or even nonmetallic) inserts which represent the fixed part of the rotational-translational converter 120.

The rotor 114 may be formed as a solid ring including the moving part of the converter 120, which may comprise a corresponding male thread. In additional, permanent magnetics may be placed inside the rotor 114, if needed.

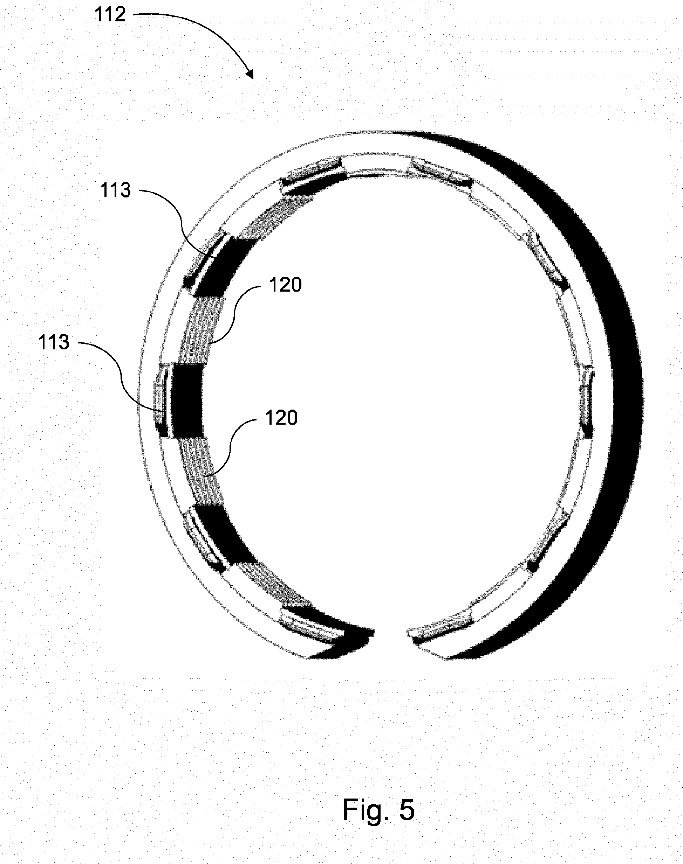

**Fig.** 5 depicts another embodiment of the stator 112, wherein the stator 112 is not made by a closed ring structure, but by an open outer ring. This embodiment is, in particular, of advantage if the space available is only limited so that the open ring can be squeezed together to insert it into a respective opening of the housing.

All other parts and functions as described previously are identical for the embodiment shown in Fig. 5.

The described embodiments of the present invention are particularly advantageous for electric vehicles and can be integrated in various vehicle units such are gear units, clutches, brakes, etc. - even if only a limited space is available.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 110: electric motor unit
- 112: stator
- 113: coil windings
- 114: rotor
- 115: protrusion of rotor
- 120: converter
- 130: actuation member
- 131: internal teeth of actuation member
- 135: recess in actuation member
- 210, 220, 240: gear wheels
- 212, 221: teeth of gear wheels
- 230: rotary shaft
- 231: external teeth of the rotary shaft

## Claims

1. An electromechanical actuator for a motor vehicle, comprising:
- an electric motor unit (110) with a stator (112) and a rotor (114); and
- a converter (120) to convert a rotation between said stator (112) and said rotor (114) into a translation enabling an actuation in said motor vehicle, wherein at least part of said converter (120) is arranged on a surface of said stator (112) facing said rotor (114),
wherein the stator (112) represents a closed or an opened ring surrounding at least partially said rotor (114) and **characterized in that** the stator (112) includes a plurality of coil winding sections (113) which are separated in a circumferential direction of the stator (112) by sections where said part of said converter (120) is provided.

2. The electromechanical actuator of claim 1,
**characterized in that**
said converter (120) comprises at least one of the following coupling elements: a thread, a pin to cam coupling, a pin in a groove coupling, two grooves with rolling elements in-between, another component providing a relative linear movement upon a relative rotation between said stator and said rotor.

3. The electromechanical actuator of claim 1 or claim 2,
**characterized in that**
said electric motor unit (110) and said converter (120) form one integrated unit.

4. The electromechanical actuator of one of the preceding claims,
**characterized in that**
said converter (120) acts as a bearing to hold said rotor (114) rotatable relative to said stator (112), wherein said stator (112) or said rotor (114) are configured to be relatively fixed to said motor vehicle (110).

5. The electromechanical actuator according to one of the preceding claims, **characterized by**
an actuation member (130) coupled to said converter (120) and placed concentrically or eccentrically to said rotor (114), the actuation member (130) being driven by said converter (120) to provide a linear force (F) for the actuation upon the rotation of said rotor (114).

6. The electromechanical actuator according to claim 5,
**characterized in that**
said actuation member (130) is axially fixed relative to said rotor (114) and is configured to rotate freely inside and relative to said rotor (114).

7. The electromagnetic actuator according to one of the preceding claims, **characterized in that**
said converter (120) is configured to provide a non-linear conversion characteristic.

8. The electromagnetic actuator according to claim 7,
**characterized in that**
said converter (120) is configured to provide a conversion characteristic such that a translation movement of said rotor (114) depends on its rotational direction only.

9. The electromagnetic actuator according to claim 7,
**characterized in that**
said converter (120) is configured to provide a conversion characteristic such that a translational movement of said rotor (114) changes while of said rotor (114) maintains a rotational direction.

10. The electromechanical actuator according to one of the preceding claims, **characterized in that**
said converter (120) is configured to provide a self-locking mechanism.

11. Vehicle, in particular a commercial vehicle, with at least one component selected from the following: a clutch, a gearbox, a counter shaft brake, a brake, **characterized in that**
said at least one component comprises an electromechanical actuator according to one of the preceding claims.

## Patentansprüche

1. Elektromechanischer Aktuator für ein Kraftfahrzeug, der Folgendes umfasst:
- eine Elektromotoreinheit (110) mit einem Stator (112) und einem Rotor (114); und
- einen Wandler (120) zum Umwandeln einer Drehung zwischen dem Stator (112) und dem Rotor (114) in eine Translation, die eine Betätigung in dem Kraftfahrzeug ermöglicht, wobei zumindest ein Teil des Wandlers (120) auf einer Oberfläche des Stators (112) angeordnet ist, die zu dem Rotor (114) zeigt,
wobei der Stator (112) einen geschlossenen oder einen geöffneten Ring repräsentiert, der den Rotor (114) zumindest teilweise umgibt, und **dadurch gekennzeichnet, dass** der Stator (112) mehrere Spulenwicklungsabschnitte (113) umfasst, die in einer umlaufenden Richtung des Stators (112) durch Abschnitte getrennt sind, in denen ein Teil des Wandlers (120) bereitgestellt ist.

2. Elektromechanischer Aktuator nach Anspruch 1,
**dadurch gekennzeichnet, dass**
der Wandler (120) zumindest eines der folgenden Kopplungselemente umfasst: ein Gewinde, eine Stift-Nocken-Kopplung, eine Stift-in-Nut-Kopplung, zwei Nuten mit dazwischen liegenden Rollelementen, eine andere Komponente, die bei einer relativen Drehung zwischen dem Stator und dem Rotor eine relative lineare Bewegung bereitstellt.

3. Elektromechanischer Aktuator nach Anspruch 1 oder Anspruch 2,
**dadurch gekennzeichnet, dass**
die Elektromotoreinheit (110) und der Wandler (120) eine integrierte Einheit bilden.

4. Elektromechanischer Aktuator nach einem der vorhergehenden Ansprüche, **dadurch gekennzeichnet, dass**
der Wandler (120) als ein Lager zum Halten des Rotors (114) wirkt, drehbar relativ zum Stator (112), wobei der Stator (112) oder der Rotor (114) dazu ausgelegt sind, relativ fixiert zum Kraftfahrzeug (110) zu sein.

5. Elektromechanischer Aktuator nach einem der vorhergehenden Ansprüche, **gekennzeichnet durch**
ein Betätigungselement (130), gekoppelt mit dem Wandler (120) und konzentrisch oder exzentrisch zu dem Rotor (114) platziert, wobei das Betätigungselement (130) durch den Wandler (120) angetrieben wird, um bei Drehung des Rotors (114) eine lineare Kraft (F) für die Betätigung bereitzustellen.

6. Elektromechanischer Aktuator nach Anspruch 5,
**dadurch gekennzeichnet, dass**
das Betätigungselement (130) relativ zum Rotor (114) axial fixiert ist und dazu ausgelegt ist, sich frei innerhalb und relativ zum Rotor (114) zu drehen.

7. Elektromagnetischer Aktuator nach einem der vorhergehenden Ansprüche, **dadurch gekennzeichnet, dass**
der Wandler (120) dazu ausgelegt ist, eine nicht-lineare Umwandlungskennlinie bereitzustellen.

8. Elektromagnetischer Aktuator nach Anspruch 7,
**dadurch gekennzeichnet, dass**
der Wandler (120) dazu ausgelegt ist, eine Umwandlungskennlinie bereitzustellen, sodass eine Translationsbewegung des Rotors (114) nur von seiner Drehrichtung abhängt.

9. Elektromagnetischer Aktuator nach Anspruch 7,
**dadurch gekennzeichnet, dass**
der Wandler (120) dazu ausgelegt ist, eine Umwandlungskennlinie bereitzustellen, sodass sich eine translatorische Bewegung des Rotors (114) ändert, während der Rotor (114) eine Drehrichtung beibehält.

10. Elektromechanischer Aktuator nach einem der vorhergehenden Ansprüche, **dadurch gekennzeichnet, dass**
der Wandler (120) dazu ausgelegt ist, einen selbst verriegelnden Mechanismus bereitzustellen.

11. Fahrzeug, insbesondere ein Nutzfahrzeug, mit zumindest einer Komponente, ausgewählt aus: einer Kupplung, einem Getriebe, einer Vorgelegewellenbremse, einer Bremse,
**dadurch gekennzeichnet, dass**
die zumindest eine Komponente einen elektromechanischen Aktuator nach einem der vorhergehenden Ansprüche umfasst.

## Revendications

1. Actionneur électromécanique d'un véhicule à moteur,
comprenant :
- une unité (110) de moteur électrique ayant un stator (112) et un rotor (114) ; et
- un transformateur (120) pour transformer une rotation entre le stator (112) et le rotor (114) en une translation permettant un actionnement dans le véhicule à moteur, dans lequel au moins une partie du transformateur (120) est disposé sur une surface du stator (112) faisant face au rotor (114), dans lequel le stator (112) représente un anneau fermé ou un anneau ouvert entourant au moins en partie le rotor (114) et **caractérisé en ce que** le stator (112) a une pluralité de parties (113) d'enroulement de bobine, qui sont séparées dans une direction circonférentielle du stator (112) par des parties où ladite partie dudit transformateur (120) est prévue.

2. Actionneur électromécanique suivant la revendication 1, **caractérisé en ce que** le transformateur (120) comprend au moins l'un des éléments d'accouplement suivants : un filetage, un accouplement broche à came, un accouplement broche dans une rainure, deux rainures ayant entre elles des éléments de roulement, un autre élément donnant un mouvement linéaire relatif après une rotation relative entre le stator et le rotor.

3. Actionneur électromécanique suivant la revendication 1 ou la revendication 2,
**caractérisé en ce que**
l'unité (110) de moteur électrique et le transformateur (120) forment une seule unité intégrée.

4. Actionneur électromécanique suivant l'une des revendications précédentes,
**caractérisé en ce que**
le transformateur (120) agit en tant que palier pour supporter le rotor (114) tournant par rapport au stator (112), le stator (112) ou le rotor (114) étant configuré pour être fixé relativement au véhicule (110) à moteur.

5. Actionneur électromécanique suivant l'une des revendications précédentes,
**caractérisé par**
un élément (130) d'actionnement accouplé au transformateur (120) et disposé concentriquement de manière excentrée au rotor (114), l'élément (130) étant entraîné par le transformateur (120) pour donner une force (F) linéaire d'actionnement après rotation du rotor (114).

6. Actionneur électromécanique suivant la revendication 5,
**caractérisé en ce que**
l'élément (130) d'actionnement est fixé axialement par rapport au rotor (114) et configuré pour tourner librement à l'intérieur du rotor (114) et par rapport à celui-ci.

7. Actionneur électromécanique suivant l'une des revendications précédentes,
**caractérisé en ce que**
le transformateur (120) est configuré pour donner une caractéristique de transformation non linéaire.

8. Actionneur électromécanique suivant la revendication 7,
**caractérisé en ce que**
le transformateur (120) est configuré pour donner une caractéristique de conversion tel qu'un mouvement de translation du rotor (114) dépend seulement de son sens de rotation.

9. Actionneur électromécanique suivant la revendication 7,
**caractérisé en ce que**
le transformateur (120) est configuré pour donner une caractéristique de transformation, telle qu'un mouvement de translation du rotor (114) change alors que le rotor (114) conserve son sens de rotation.

10. Actionneur électromécanique suivant l'une des revendications précédentes,
**caractérisé en ce que**
le transformateur (120) est configuré pour donner un mécanisme d'auto-verrouillage.

11. Véhicule, en particulier véhicule utilitaire, ayant au moins un élément choisi parmi les suivants : un embrayage, une boîte de vitesse, un frein à arbre intermédiaire, un frein,
**caractérisé en ce que**
le au moins un élément comprend un actionneur électromécanique suivant l'une des revendications précédentes.
